# EUROPEAN PATENT APPLICATION

(11) **EP 4 693 547 A1**
(43) Date of publication of application: **11.02.2026**
(21) Application number: 25178099.5
(22) Date of filing: 22.05.2025
(51) Int. Cl.: H01M 10/04, G01B 11/06

(54) **APPARATUS AND METHOD FOR DETECTING SCRAPS**

(30) Priority: 06.08.2024 KR 20240104664
(71) Applicant: SAMSUNG SDI CO., LTD., Yongin-si, Gyeonggi-do 17084 (KR)
(72) Inventor: LEE, Seungchan, 17084 Yongin-Si Gyeonggi-do (KR)
(74) Representative: Gulde & Partner

(57) **Abstract**

An apparatus for detecting scraps, the apparatus including a base with an electrode assembly on an upper surface thereof, a support, a driver configured to move the support, a vertically moving member vertically movably joined to the support, a plate joined to the vertically moving member, the plate contacting an upper surface of the electrode assembly and including a measurement region, a distance measurement sensor configured to measure a distance to the measurement region of the plate, and a controller configured to control the driver, receive a measured distance value from the distance measurement sensor to the measurement region of the plate, and detect scraps introduced into the electrode assembly based on the measured distance value.

## Description

### BACKGROUND

### 1. Field

Embodiments relate to an apparatus and method for detecting scraps.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

The above information disclosed in this Background section is for enhancement of understanding of the background of the present disclosure, and therefore, it may contain information that does not constitute related (or prior) art.

### SUMMARY

Embodiments include an apparatus for detecting scraps, the apparatus including a base in which an electrode assembly is disposed on an upper surface thereof, a support, a driver configured to move the support, a vertically moving member vertically movably joined to the support, a plate joined to the vertically moving member, the plate being configured to contact an upper surface of the electrode assembly and including a measurement region, a distance measurement sensor configured to measure a distance to the measurement region of the plate, and a controller configured to control the driver, receive a measured distance value from the distance measurement sensor to the measurement region of the plate, and detect scraps introduced into the electrode assembly based on the measured distance value.

The apparatus may further include a vacuum absorption part, wherein the plate includes at least one vacuum absorption hole, and the controller controls the vacuum absorption part so that the electrode assembly is absorbed to a lower portion of the plate by vacuum pressure from the at least one vacuum absorption hole.

In response to determining that scraps introduced into the electrode assembly are not detected based on the measured distance value, the controller may control the driver to transport the electrode assembly while the electrode assembly is absorbed to the lower portion of the plate.

The apparatus may further include a guide member configured to guide upward and downward movement of the vertical moving member between the support and the vertical moving member.

The guide member may include a bearing.

The apparatus may further include a capturing portion below the guide member to capture foreign materials generated from the guide member.

The apparatus may further include a support cover joined to the support, the support cover being above the vertical moving member, and a restoring portion between the support cover and the vertical moving member, the restoring portion providing a downward force to the vertical moving member.

The restoring portion may include a first polarity magnet and a second polarity magnet, a first polarity of the first polarity magnet and a second polarity of the second polarity magnet are a same polarity, the first polarity magnet is on a lower surface of the support cover, and the second polarity magnet is on an upper surface of the vertical moving member.

The restoring portion may include an elastic member.

The measurement region may be on an upper surface of the plate.

The controller may be configured to control the driver to primarily lower the support so that a lower surface of the plate contacts the upper surface of the electrode assembly, after primarily lowering the support, control the driver to secondarily lower the support by a predefined distance, and after secondarily lowering the support, receive a measured distance value from the distance measurement sensor to the measurement region of the plate.

After the controller primarily lowers the support a vertical distance between the support cover and the vertical moving member is a first distance, the vertical distance is a second distance, and the second distance is shorter than the first distance.

The controller may be further configured to determine the thickness of the electrode assembly based on the measured distance value and a reference distance value, resulting in a determined thickness and detect scraps introduced into the electrode assembly based on the determined thickness of the electrode assembly and a reference thickness.

The reference distance value may be a distance to the measurement region of the plate measured by the distance measurement sensor while the lower surface of the plate is in contact with the upper surface of the base.

After detecting scraps introduced into the electrode assembly is completed, the controller may control the driver to raise a support, and after the controller raises the support, the vertical distance between the support cover and the vertical moving member may be restored to the first distance by the restoring portion.

Embodiments include a method for detecting scraps, the method including disposing an electrode assembly on an upper surface of a base, measuring a distance to a measurement region of a plate contacting an upper surface of the electrode assembly using a distance measurement sensor, and detecting scraps introduced into the electrode assembly based on a measured distance value to the measurement region of the plate measured by the distance measurement sensor.

The plate may be joined to a vertical moving member, the vertical moving member may be vertically movably joined to a support, and measuring the distance includes primarily lowering the support so that a lower surface of the plate contacts the upper surface of the electrode assembly, after primarily lowering the support, secondarily lowering the support by a predefined distance, and after secondarily lowering the support, measuring a distance value by using the distance measurement sensor.

A support cover may be attached to the support on an upper side of the vertical moving member, the restoring portion is between the support cover and the vertical moving member to provide a downward force to the vertical moving member, a vertical distance between the support cover and the vertical moving member after primarily lowering the support is a first distance, a vertical distance between the support cover and the vertical moving member after secondarily lowering the support is a second distance, and the second distance is shorter than the first distance.

The restoring portion comprises a first polarity magnet and a second polarity magnet, a first polarity of the first polarity magnet and a second polarity of the second polarity magnet are a same polarity, the first polarity magnet is on a lower surface of the support cover, and the second polarity magnet is on an upper surface of the vertical moving member.

Detecting scraps may include determining a thickness of the electrode assembly based on the measured distance value and a reference distance value, resulting in a determined thickness, and detecting scraps introduced into the electrode assembly based on the determined thickness and a reference thickness.

These and other aspects and features of the present disclosure will be described in or will be apparent from the following description of embodiments of the present disclosure.

However, aspects and features of the present disclosure are not limited to those described above, and other aspects and features not mentioned will be clearly understood by a person skilled in the art from the detailed description, described below.

### BRIEF DESCRIPTION OF DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings.

Features will become apparent to those of skill in the art by describing in detail exemplary embodiments with reference to the attached drawings, in which:
FIG. 1 illustrates an example of an apparatus for detecting scraps according to one or more embodiments of the present disclosure;
FIG. 2 illustrates an example of a lower surface of a third plate according to one or more embodiments of the present disclosure;
FIG. 3 illustrates an example of an apparatus for detecting scraps according to one or more embodiments of the present disclosure;
FIG. 4 illustrates a flowchart showing an example of a method for detecting scraps according to one or more embodiments of the present disclosure;
FIG. 5 illustrates a flowchart showing an example of a method for measuring a distance to a measurement region according to one or more embodiments of the present disclosure;
FIG. 6 illustrates an example in which an apparatus for detecting scraps according to one or more embodiments of the present disclosure determines a reference distance;
FIG. 7 illustrates an example in which an electrode assembly is disposed on a base, according to one or more embodiments of the present disclosure;
FIG. 8 illustrates an example in which an apparatus for detecting scraps according to one or more embodiments of the present disclosure primarily moves downward;
FIG. 9 illustrates an example in which an apparatus for detecting scraps according to one or more embodiments of the present disclosure secondarily moves downward;
FIG. 10 illustrates an example in which an apparatus for detecting scraps according to one or more embodiments of the present disclosure detects scraps introduced into an electrode assembly; and
FIG. 11 illustrates an example in which an apparatus for detecting scraps according to one or more embodiments of the present disclosure transports an electrode assembly.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her embodiments in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when a layer or element is referred to as being "between" two layers, it can be the only layer between the two layers, or one or more intervening layers may also be present. It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of local patent laws.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

In this specification, an "electrode assembly" may be formed or manufactured by winding or stacking a stack of a positive electrode plate, a separator, and a negative electrode plate formed in a thin plate shape or a film shape. In this case, the positive electrode plate may be formed by applying a positive electrode active material, such as graphite or carbon, to a positive electrode current collector plate formed of a metal foil, such as aluminum. In some embodiments, the negative electrode plate may be formed by applying a negative electrode active material, such as a transition metal oxide, to a negative electrode current collector formed of a metal foil, such as copper or nickel.

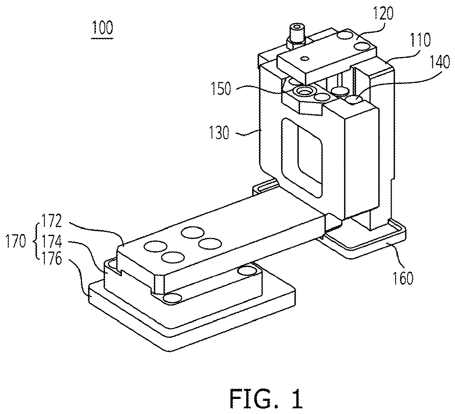

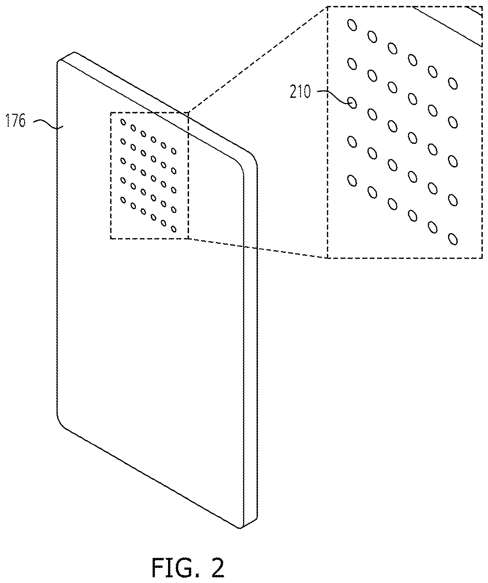

FIG. 1 illustrates an example of an apparatus 100 for detecting scraps according to one or more embodiments of the present disclosure, and FIG. 2 illustrates an example of a lower surface of a third plate 176 according to one or more embodiments of the present disclosure. In one or more embodiments, the apparatus 100 for detecting scraps may include a support 110, a support cover 120, a vertical moving member 130, a guide member 140, a restoring portion 150, a capturing portion 160, and a plate 170. The support 110 may be moved and/or rotated by a driver. In some embodiments, the support cover 120 may be joined to the support 110.

The vertical moving member 130 may be vertically movably connected to the support 110. In this case, the support cover 120 may be disposed on the upper side of the vertical moving member 130 (in the orientation show in FIG. 1). In some embodiments, the guide member 140 may be disposed between the support 110 and the vertical moving member 130 to guide the upward and downward movement of the vertical moving member 130. The guide member 140 may include a bearing or a linear motion bearing, but the guide member 140 may include a member capable of guiding the upward and downward movement of the vertical moving member 130.

The restoring portion 150 may be disposed between the support cover 120 and the vertical moving member 130. Specifically, the restoring portion 150 may be disposed on the lower surface of the support cover 120 and the upper surface of the vertical moving member 130 facing the lower surface of the support cover 120. This restoring portion 150 may provide a downward force to the vertical moving member 130 so that the vertical moving member 130 moves downward. The support 110 may further include a movement limiter defining the lowest position of the vertical moving member 130. The vertical moving member 130 may not move below the lowest position due to the movement limiter.

In one or more embodiments, the restoring portion 150 may include a first polarity magnet and a second polarity magnet. The first polarity and the second polarity may be the same as each other. Accordingly, the first polarity magnet and the second polarity magnet may provide a repulsive force to each other. In some embodiments, the first polarity magnet may be disposed on the lower surface of the support cover 120, and the second polarity magnet may be disposed on the upper surface of the vertical moving member 130. For example, the first polarity magnet and the second polarity magnet may be neodymium magnets, but other types of magnets are possible. In some embodiments, the restoring portion 150 may include an elastic member. For example, the restoring portion 150 may be a spring connected to the lower surface of the support cover 120 and the upper surface of the vertical moving member 130.

The capturing portion 160 may be disposed below the guide member 140. In some embodiments, the capturing portion 160 may capture foreign materials generated in the guide member 140 due to the upward and downward movement of the vertical moving member 130. In some embodiments, the capturing portion 160 may be detachably attached to the apparatus 100 for detecting scraps to allow disposal of captured foreign materials.

The plate 170 may be joined to the vertical moving member 130. In some embodiments, the plate 170 may contact an upper surface of an electrode assembly and include a measurement region. For example, the plate 170 may include a first plate 172, a second plate 174 joined to at least a portion of the lower surface of the first plate 172, and a third plate 176 joined to at least a portion of the lower surface of the second plate 174. In this case, the measurement region may be provided on the upper surface of the first plate 172. In some embodiments, the lower surface of the third plate 176 may contact the upper surface of the electrode assembly.

In one or more embodiments, referring to FIG. 2, the plate 170 may include at least one vacuum absorption hole 210. Specifically, at least one vacuum absorption hole 210 may be formed in the lower surface of the third plate 176. Accordingly, the electrode assembly may be absorbed to the lower surface of the third plate 176 by vacuum pressure from at least one vacuum absorption hole 210.

In FIG. 1, the plate 170 is illustrated as including the first plate 172, the second plate 174, and the third plate 176, but the plate 170 may include only the first plate 172, and the electrode assembly may be absorbed to the bottom surface of the first plate 172 by the vacuum pressure from at least one vacuum absorption hole formed in the surface of the first plate 172.

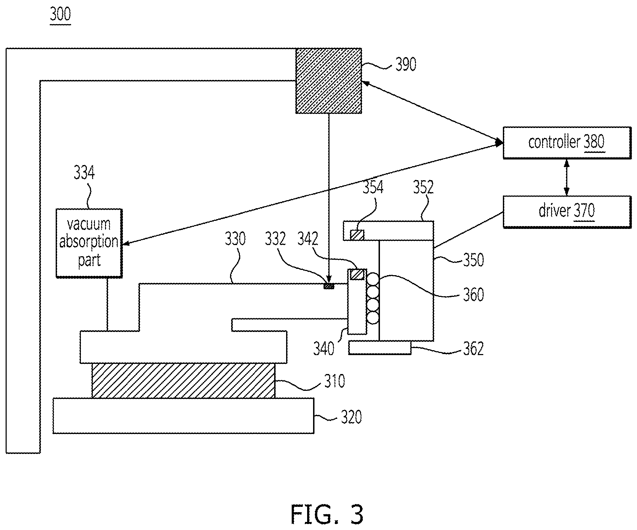

FIG. 3 illustrates an example of an apparatus 300 for detecting scraps according to one or more embodiments of the present disclosure. In one or more embodiments, the apparatus 300 for detecting scraps may include a base 320 having an electrode assembly 310 disposed on an upper surface thereof, a plate 330 contacting the upper surface of the electrode assembly 310, a vertical moving member 340 joined to the plate 330, a support 350 joined to the vertical moving member 340, a guide member 360 guiding the vertical moving member 340 to move upward and downward, the guide member 360 being between the support 350 and the vertical moving member 340, a driver 370 that moves the support 350, and a controller 380 that controls the driver 370.

In one or more embodiments, the apparatus 300 for detecting scraps may further include a vacuum absorption part 334. The vacuum absorption part 334 may be connected to the plate 330. In some embodiments, the plate 330 may include at least one vacuum absorption hole. Specifically, at least one vacuum absorption hole may be formed on the surface of the plate 330 that contacts the electrode assembly 310. In this case, the controller 380 may control the vacuum absorption part 334 so that the electrode assembly 310 is absorbed to the lower portion of the plate 330 by vacuum pressure from at least one vacuum absorption hole.

In one or more embodiments, the plate 330 may include a measurement region 332. The measurement region 332 may be provided on the upper surface of the plate 330. In some embodiments, the apparatus for detecting scraps may further include a distance measurement sensor 390 that measures the distance to the measurement region 332. For example, the distance measurement sensor 390 may include a laser displacement meter, a laser range meter, an ultrasonic range meter, an optical range meter, and the like, but other ways of measuring the distance are possible. The distance measurement sensor 390 may be disposed adjacent to a vision inspector that inspects the quality of the electrode assembly 310.

In one or more embodiments, the controller 380 may receive a measured distance value from the distance measurement sensor 390 to the measurement region 332. In some embodiments, the controller 380 may detect scraps introduced into the electrode assembly 310 based on the received measured distance value.

In one or more embodiments, the electrode assembly 310 may be transported. Specifically, in response to determining that scraps introduced into the electrode assembly 310 are not detected based on the received measured distance value, the controller 380 may control the driver 370 to transport the electrode assembly 310 while the electrode assembly 310 is absorbed to the lower portion of the plate 330. For example, in a case where scraps entering the electrode assembly 310 are not detected, the electrode assembly 310 may be transported to a first region for subsequent processing. In another example, in a case where scraps introduced into the electrode assembly 310 are detected, the electrode assembly 310 may be transported to a second region.

In one or more embodiments, the apparatus 300 for detecting scraps may further include a capture portion 362. The capture portion 362 may be disposed below the guide member 360. In some embodiments, the capture portion 362 may capture foreign materials generated in the guide member 360 due to the upward and downward movement of the vertical moving member 340. In some embodiments, the capture portion 362 may be detachably attached to the apparatus 300 for detecting scraps to allow disposal of captured foreign materials.

In one or more embodiments, the apparatus 300 for detecting scraps may further include a support cover 352 joined to the support 350 and disposed above the vertical moving member 340, and a restoring portion disposed between the support cover 352 and the vertical moving member 340 to provide a downward force to the vertical moving member 340. The restoring portion may include a first polarity magnet 354 and a second polarity magnet 342. The first polarity and the second polarity may be the same as each other. In some embodiments, the first polarity magnet 354 may be disposed on the lower surface of the support cover 352, and the second polarity magnet 342 may be disposed on the upper surface of the vertical moving member 340.

In one or more embodiments, the controller 380 may control the driver 370 to primarily lower the support 350 so that the lower surface of the plate 330 contacts the upper surface of the electrode assembly 310. In some embodiments, the controller 380 may primarily lower the support 350 and then control the driver 370 to secondarily lower the support 350 by a predefined distance (e.g., 5 mm, etc.). In some embodiments, after secondarily lowering the support 350, the controller 380 may receive the measured distance value from the distance measurement sensor 390 to the measurement region 332 of the plate 330.

In one or more embodiments, the controller 380 may determine the thickness of the electrode assembly 310 based on the measured distance value and a reference distance value. In some embodiments, the controller 380 may detect scraps introduced into the electrode assembly 310 based on the determined thickness of the electrode assembly 310 and the reference thickness. The reference distance value may be the distance to the measurement region 332 of the plate 330 measured by the distance measurement sensor 390 while the lower surface of the plate 330 is in contact with the upper surface of the base 320.

With this advantageous configuration, scraps introduced into the electrode assembly may be easily detected by measuring the distance to the plate contacting the electrode assembly without directly contacting the plate. In addition, scraps introduced into the electrode assembly may be more accurately detected, regardless of the color of the scrap.

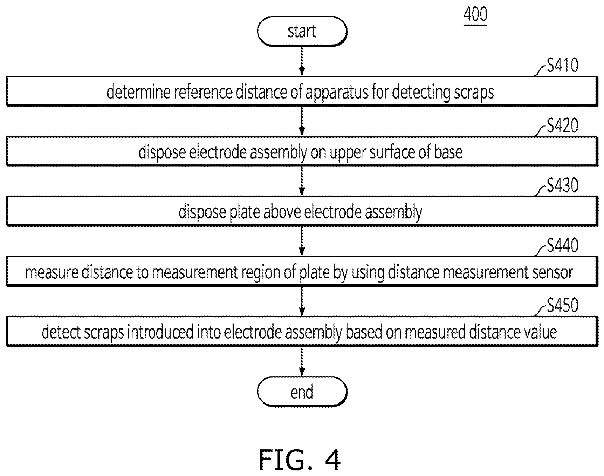

FIG. 4 illustrates a flowchart showing an example of a method 400 for detecting scraps according to one or more embodiments of the present disclosure. In one or more embodiments, the method 400 for detecting scraps may be performed by a controller (e.g., 380 of FIG. 3, at least one processor, etc.). The method 400 for detecting scraps may be started by a process S410 of determining, by the controller, a reference distance of an apparatus for detecting scraps. The reference distance may be the distance from the lower surface of the plate of the apparatus (e.g., 300 in FIG. 3) for detecting scraps to the measurement region of the plate measured by the distance measurement sensor while the lower surface of the plate is in contact with the upper surface of the base.

Thereafter, the controller may dispose the electrode assembly on the upper surface of the base (S420). In some embodiments, the controller may dispose a plate above the electrode assembly (S430). Specifically, the controller may move and dispose the plate so that the lower surface of the plate contacts the upper surface of the electrode assembly.

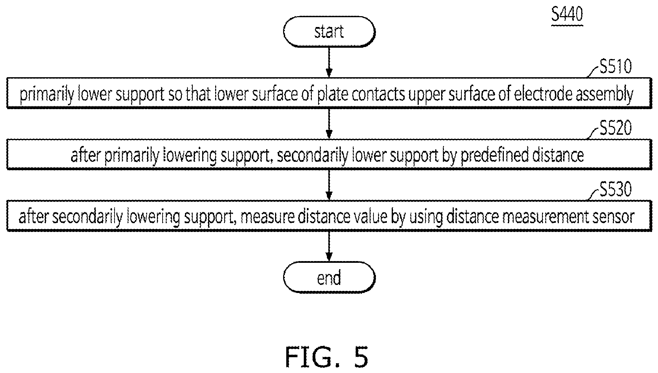

Thereafter, the controller may measure the distance to the measurement region of the plate by using the distance measurement sensor (S440). Specifically, the controller may measure the distance to the measurement region of the plate contacting the upper surface of the electrode assembly by using the distance measurement sensor. The measurement region of the plate may be provided on the upper surface of the plate. The method of measuring the distance to the measurement region of the plate is described in detail below with reference to FIG. 5.

Based on the measured distance value, the controller may detect scraps introduced into the electrode assembly (S450). Specifically, the controller may determine the thickness of the electrode assembly based on the measured distance value and the reference distance. In some embodiments, the controller may detect scraps introduced into the electrode assembly based on the determined thickness of the electrode assembly and the reference thickness.

FIG. 5 illustrates a flowchart showing an example of a method S440 for measuring a distance to a measurement region according to one or more embodiments of the present disclosure. In one or more embodiments, the method S440 of measuring the distance to the measurement region may be started by a process S510 of primarily lowering, by the controller, the support so that the lower surface of the plate contacts the upper surface of the electrode assembly. The plate may be joined to the vertical moving member, and the vertical moving member may be vertically movably joined to the support.

After primarily lowering the support, the controller may secondarily lower the support by a predefined distance (e.g., 5 mm, etc.) (S520). In some embodiments, after secondarily lowering the support, the controller may measure the distance value by using the distance measurement sensor (S530).

In one or more embodiments, the support cover may be joined to the support so as to be disposed above the vertical moving member. In this case, the restoring portion may be disposed between the support cover and the vertical moving member so as to provide a downward force to the vertical moving member. After the support is primarily lowered, the vertical distance between the support cover and the vertical moving member may be a first distance. After the support is secondarily lowered, the vertical distance between the support cover and the vertical moving member may be a second distance. In this case, the second distance may be shorter than the first distance.

In one or more embodiments, the restoring portion may include a first polarity magnet and a second polarity magnet. The first polarity and the second polarity may be the same as each other. Accordingly, the first polarity magnet and the second polarity magnet may repel each other. In some embodiments, the first polarity magnet may be disposed on the lower surface of the support cover, and the second polarity magnet may be disposed on the upper surface of the vertical moving member.

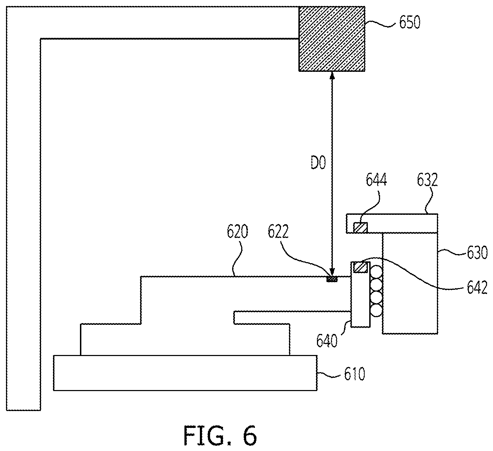

FIGS. 6 to 10 illustrate an example of a method for detecting scraps according to one or more embodiments of the present disclosure. In one or more embodiments, the apparatus for detecting scraps may include a base 610, a plate 620 including a measurement region 622, a support 630, a vertical moving member 640 vertically movably joined to the support 630 and joined to the plate 620, and a distance measurement sensor 650 for measuring the distance to the measurement region 622. In some embodiments, the apparatus for detecting scraps may further include a support cover 632 joined to the support 630 and disposed above the vertical moving member 640, and a restoring portion disposed between the support cover 632 and the vertical moving member 640 to provide a downward force to the vertical moving member 640.

In one or more embodiments, the restoring portion may include a first polarity magnet 644 and a second polarity magnet 642. The first polarity and the second polarity may be the same as each other. In some embodiments, the first polarity magnet 644 may be disposed on the lower surface of the support cover 632, and the second polarity magnet 642 may be disposed on the upper surface of the vertical moving member 640.

In one or more embodiments, the method for detecting scraps may be performed by a controller (e.g., 390 of FIG. 3). The controller may determine a reference distance value of the apparatus for detecting scraps. Referring to FIG. 6, the reference distance value may be a distance D0 to the measurement region 622 of the plate 620 measured by the distance measurement sensor 650 while the lower surface of the plate 620 is in contact with the upper surface of the base 610.

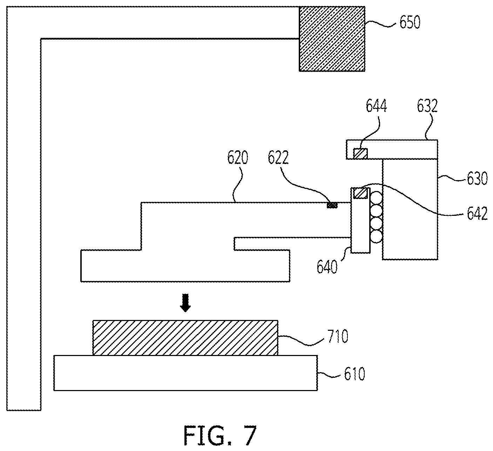

In one or more embodiments, the controller may move the electrode assembly so as to be disposed on the base. Referring to FIG. 7, an electrode assembly 710 may be disposed on the upper surface of the base 610. In this case, the controller may control the driver (e.g., 370 of FIG. 3) of the apparatus for detecting scraps to primarily lower the support 630 so that the lower surface of the plate 620 contacts the upper surface of the electrode assembly 710.

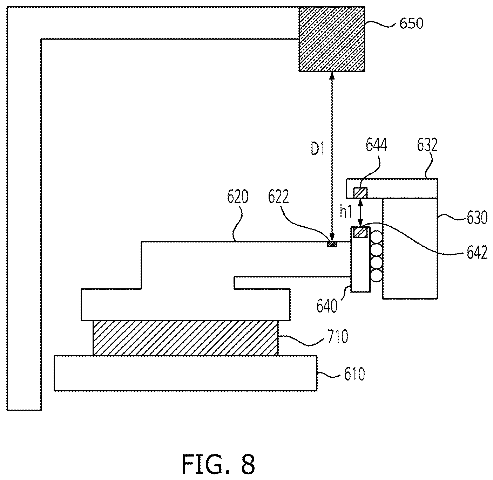

Referring to FIG. 8, after the controller primarily lowers the support 630, the vertical distance between the support cover 632 and the vertical moving member 640 may be a first distance h1. That is, the vertical distance between the first polarity magnet 644 disposed on the lower surface of the support cover 632 and the second polarity magnet 642 disposed on the upper surface of the vertical moving member 640 may be the first distance h1.

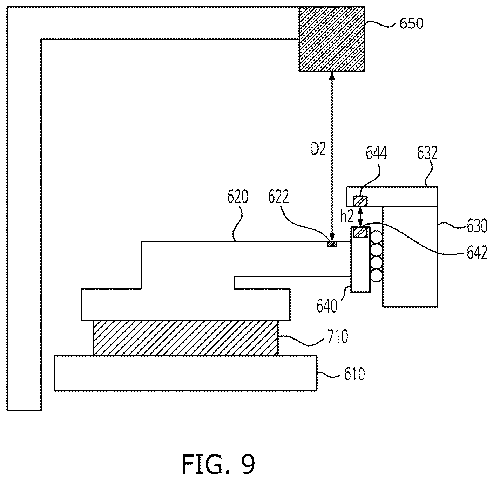

In one or more embodiments, the controller may secondarily lower the support. Referring to FIG. 9, the controller may primarily lower the support 630 and then control the driver to secondarily lower the support 630 by a predefined distance (e.g., 5 mm). In this case, because the plate 620 joined to the vertical moving member 640 is in contact with the electrode assembly 710, the vertical moving member 640 may be lowered by a shorter distance than a predefined distance. In some embodiments, as the distance between the first polarity magnet 644 and the second polarity magnet 642 decreases, the downward force applied to the plate 620 increases, and the plate 620 may be more compressed with the electrode assembly 710. Accordingly, after the controller secondarily lowers the support 630, the vertical distance between the support cover 632 and the vertical moving member 640 may be a second distance h2. In this case, the second distance h2 may be shorter than the first distance h1.

In one or more embodiments, the controller may measure the distance to the measurement region 622 of the plate 620 that contacts the upper surface of the electrode assembly 710 by using the distance measurement sensor 650. That is, the controller may use the distance measurement sensor 650 to measure the distance D2 to the measurement region 622 while the plate 620 is compressing the electrode assembly 710. Accordingly, the distance D1 to the measurement region 622 of the plate 620 measured by the distance measurement sensor 650 after the support 630 is primarily lowered may be shorter than the distance D2 to the measurement region 622 of the plate 620 measured by the distance measurement sensor 650 after the support 630 is secondarily lowered.

In one or more embodiments, the controller may detect scraps introduced into the electrode assembly 710 based on the distance D2 to the measurement region 622 measured by the distance measurement sensor 650 after the support 630 is secondarily lowered. Specifically, the controller may determine the thickness of the electrode assembly 710 based on the measurement distance D2 and the reference distance D0. In some embodiments, scraps introduced into the electrode assembly 710 may be detected based on the thickness of the electrode assembly 710 and the reference thickness (e.g., the predefined reference thickness).

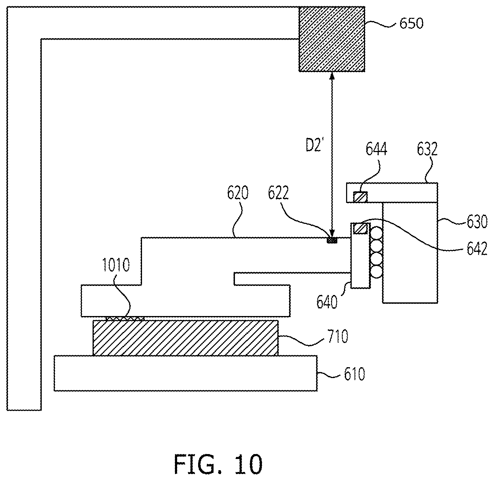

For example, referring to FIG. 10, the distance D2' to the measurement region 622 measured using the distance measurement sensor 650 in a case where scraps 1010 are introduced into the electrode assembly 710 may be shorter than the distance D2 to the measurement region 622 measured using the distance measurement sensor 650 in a case where scraps are not introduced (see FIG. 9). That is, the controller may determine the thickness of the electrode assembly 710 based on the distance D2' to the measurement region 622 measured using the distance measurement sensor 650, and may determine that the determined thickness is greater than the reference thickness by a threshold value or a threshold ratio or more. Accordingly, the controller may detect scraps 1010 introduced into the electrode assembly 710.

In one or more embodiments, the controller may control the driver to raise the support 630 after the detection of scraps introduced into the electrode assembly 710 is completed (or after the scrap detection process is completed). At this time, the controller may drive the vacuum absorption part to cause the support 630 to move upward while the plate 620 absorbs the electrode assembly 710. After the controller raises the support 630, the vertical distance between the support cover 632 and the vertical moving member 640 may be restored to the first distance h1 by the restoring unit (or the first polarity magnet 644 and the second polarity magnet 642).

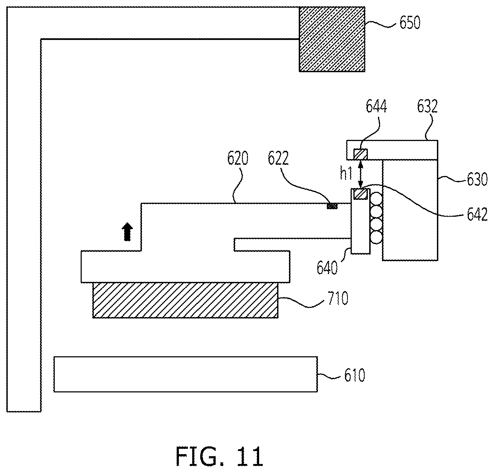

In one or more embodiments, the controller may move the electrode assembly based on the measured distance. Referring to FIG. 11, in response to determining that scraps introduced into the electrode assembly 710 are not detected based on the measurement distance D2, the controller may control the driver to transport the electrode assembly 710 to a subsequent process while the electrode assembly 710 is absorbed to the lower portion of the plate 620. In some embodiments, in response to determining that scraps introduced into the electrode assembly 710 are detected based on the measurement distance D2', the controller may control the driver to transport the electrode assembly 710 to a discard process (e.g., NG box, etc.) while the electrode assembly 710 is absorbed to the lower portion of the plate 620.

With this configuration, the thickness of the electrode assembly may be measured more accurately by determining the thickness of the electrode assembly based on the distance to the measurement region while the plate is compressed in the electrode assembly. Accordingly, foreign materials introduced into the electrode assembly may be detected more accurately, and the quality of the electrode assembly may be effectively managed.

During the process of manufacturing an electrode assembly, scraps may be generated in a case where the electrode plates included in the electrode assembly are punched. In a case where such scraps enter the electrode assembly, the secondary battery including the electrode assembly may experience problems such as ignition and low voltage. A conventional technology detects whether scraps have entered the electrode plate using a vision inspector, but there is a problem in that scraps cannot be detected in a case where the colors of the scraps are the same as the color of the electrode plate.

According to some embodiments of the present disclosure, scraps introduced into the electrode assembly may be easily detected by measuring the distance to the plate contacting the electrode assembly without directly contacting the plate. In addition, scraps introduced into the electrode assembly may be more accurately detected, regardless of the color of the scrap.

According to some embodiments of the present disclosure, the thickness of the electrode assembly may be measured more accurately by determining the thickness of the electrode assembly based on the distance to the measurement region while the plate is compressed in the electrode assembly. Accordingly and avantageously, foreign materials introduced into the electrode assembly may be detected more accurately, and the quality of the electrode assembly may be effectively managed.

Although the present disclosure has been described above with respect to embodiments thereof, the present disclosure is not limited thereto. Various modifications and variations can be made thereto by those skilled in the art within the scope of the present disclosure and the equivalent scope of the appended claims.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of ordinary skill in the art that various changes in form and details may be made without departing from the scope of the present invention as set forth in the following claims.

### DESCRIPTION OF SOME REFERENCE SYMBOLS

100: apparatus for detecting scraps
110: support
120: support cover
130: vertical moving member
140: guide member
150: restoring portion
160: capturing portion
170: plate

## Claims

1. An apparatus (100, 300) for detecting scraps (1010), the apparatus (100, 300) comprising:
a base (320, 610) in which an electrode assembly (310, 710) is disposed on an upper surface thereof;
a support (110, 350, 630);
a driver (370) configured to move the support (110, 350, 630);
a vertically moving member (130, 340, 640) vertically movably joined to the support (110, 350, 630);
a plate (170, 330, 620) joined to the vertically moving member (130, 340, 640), the plate (170, 330, 620) being configured to contact an upper surface of the electrode assembly (310, 710) and including a measurement region (332, 622);
a distance measurement sensor (390, 650) configured to measure a distance to the measurement region (332, 622) of the plate (170, 330, 620); and
a controller (380) configured to:
control the driver (370),
receive a measured distance value from the distance measurement sensor (390, 650) to the measurement region (332, 622) of the plate (170, 330, 620), and
detect scraps (1010) introduced into the electrode assembly (310, 710) based on the measured distance value.

2. The apparatus (100, 300) as claimed in claim 1, further comprising a vacuum absorption part (334), wherein:
the plate (170, 330, 620) comprises at least one vacuum absorption hole (210), and
the controller (380) controls the vacuum absorption part (334) so that the electrode assembly (310, 710) is absorbed to a lower portion of the plate (170, 330, 620) by vacuum pressure from the at least one vacuum absorption hole (210).

3. The apparatus (100, 300) as claimed in claim 2, wherein, in response to determining that scraps (1010) introduced into the electrode assembly (310, 710) are not detected based on the measured distance value, the controller (380) controls the driver (370) to transport the electrode assembly (310, 710) while the electrode assembly (310, 710) is absorbed to the lower portion of the plate (170, 330, 620).

4. The apparatus (100, 300) as claimed in claims 1 to 3, further comprising a guide member (140, 360) configured to guide upward and downward movement of the vertical moving member (130, 340, 640) between the support (110, 350, 630) and the vertical moving member (130, 340, 640).

5. The apparatus (100, 300) as claimed in claim 4, wherein the guide member (140, 360) comprises a bearing.

6. The apparatus (100, 300) as claimed in claim 4 or 5, further comprising a capturing portion (160, 362) below the guide member (140, 360) to capture foreign materials generated from the guide member (140, 360).

7. The apparatus (100, 300) as claimed in claims 1 to 6, further comprising:
a support cover (120, 352, 632) joined to the support (110, 350, 630), the support cover (120, 352, 632) being above the vertical moving member (130, 340, 640); and
a restoring portion (150) between the support cover (120, 352, 632) and the vertical moving member (130, 340, 640), a restoring portion (150) providing a downward force to the vertical moving member (130, 340, 640).

8. The apparatus (100, 300) as claimed in claim 7, wherein:
the restoring portion (150) comprises a first polarity magnet (354, 644) and a second polarity magnet (342, 642),
a first polarity of the first polarity magnet (354, 644) and a second polarity of the second polarity magnet (342, 642) are a same polarity,
the first polarity magnet (354, 644) is on a lower surface of the support cover (120, 352, 632), and
the second polarity magnet (342, 642) is on an upper surface of the vertical moving member (130, 340, 640).

9. The apparatus (100, 300) as claimed in claim 7 or 8, wherein the restoring portion (150) comprises an elastic member.

10. The apparatus (100, 300) as claimed in claims 1 to 9, wherein the measurement region (332, 622) is on an upper surface of the plate (170, 330, 620).

11. The apparatus (100, 300) as claimed in claims 7 to 10, wherein the controller (380) is configured to:
control the driver (370) to primarily lower the support (110, 350, 630) so that a lower surface of the plate (170, 330, 620) contacts the upper surface of the electrode assembly (310, 710);
after primarily lowering the support (110, 350, 630), control the driver (370) to secondarily lower the support (110, 350, 630) by a predefined distance; and
after secondarily lowering the support (110, 350, 630), receive a measured distance value from the distance measurement sensor (390, 650) to the measurement region (332, 622) of the plate (170, 330, 620).

12. The apparatus (100, 300) as claimed in claim 11, wherein after the controller (380) primarily lowers the support (110, 350, 630):
a vertical distance between the support cover (120, 352, 632) and the vertical moving member (130, 340, 640) is a first distance,
the vertical distance is a second distance, and
the second distance is shorter than the first distance.

13. The apparatus (100, 300) as claimed in claim 11 or 12, wherein the controller (380) is further configured to:
determine a thickness of the electrode assembly (310, 710) based on the measured distance value and a reference distance value, resulting in a determined thickness, and
detect scraps (1010) introduced into the electrode assembly (310, 710) based on the determined thickness of the electrode assembly (310, 710) and a reference thickness.

14. The apparatus (100, 300) as claimed in claim 13, wherein the reference distance value is a distance to the measurement region (332, 622) of the plate (170, 330, 620) measured by the distance measurement sensor (390, 650) while the lower surface of the plate (170, 330, 620) is in contact with the upper surface of the base (320, 610).

15. The apparatus (100, 300) as claimed in claims 12 to 14, wherein, after detecting scraps (1010) introduced into the electrode assembly (310, 710) is completed:
the controller (380) controls the driver (370) to raise the support (110, 350, 630), and
after the controller (380) raises the support (110, 350, 630), the vertical distance between the support (110, 350, 630) cover and the vertical moving member (130, 340, 640) is restored to the first distance (h1) by the restoring portion (150).
